# EUROPEAN PATENT APPLICATION

(11) **EP 2 631 097 A1**
(43) Date of publication of application: **28.08.2013**
(21) Application number: 12156309.2
(22) Date of filing: 21.02.2012
(51) Int. Cl.: B60H 1/00

(54) **Air conditioning system of a motor-vehicle**

(71) Applicant: Fiat Group Automobiles S.p.A., 10135 Torino (TO) (IT)
(72) Inventor: Tiberi, Pierluigi, 10135 Torino (IT)
(74) Representative: Notaro, Giancarlo

(57) **Abstract**

In an air-conditioning system for motor vehicles, the radiator (2) for heating the passenger compartment (10) is excluded from connection to the circuit for cooling the engine when heating of the passenger compartment (10) is not required. In said condition, a mixing valve (M) that controls the flow of air (F) downstream of an evaporator (12) of the circuit for cooling the motor vehicle is set in an intermediate position, in which part of the flow of air leaving the evaporator (12) flows directly in the passenger compartment of the motor vehicle, keeping it cooled, whilst part of the flow of air leaving the evaporator (12) flows through the aforesaid heating radiator, which in said condition functions as accumulator of cold. In the steps in which the passenger compartment (10) must continue to be cooled but the cooling circuit is temporarily deactivated, for example on account of an arrest of the engine of the motor vehicle due to a strategy of the stop-and-start type, cooling of the passenger compartment is ensured by the aforesaid radiator (2) that in said step yields the cold previously accumulated to the flow of air that traverses it before reaching the passenger compartment (10).

## Description

The present invention relates to air-conditioning systems for motor vehicles, of the type comprising:
- an evaporator for cooling the air, forming part of a cooling circuit and interposed in a path of a flow of air;
- a radiator for heating air, connected to the circuit of the liquid for cooling the internal-combustion engine of the motor vehicle, and set in the aforesaid path of the flow of air, downstream of the evaporator; and
- a mixing valve, for example in the form of an oscillating flap, for directing the flow of air leaving the evaporator all through the heating radiator, or else all directly to the passenger compartment without passing through the heating radiator, or else part through the heating radiator and part directly to the passenger compartment.

In all vehicles with internal-combustion engine, turning-off of the engine entails simultaneous interruption of the generation of cold on account of arrest of the compressor forming part of the cooling circuit. Normally in fact, said compressor is driven by the internal-combustion engine (the problem discussed here does not exist in the cases where the compressor is driven by an electric engine). When the engine of the motor vehicle stops, the evaporator of the cooling circuit loses its capacity for cooling the flow of air directed to the passenger compartment of the motor vehicle on account of the lack of a flow of coolant inside it. In said condition, the evaporator tends to heat up in a few seconds. Said phenomenon penalizes above all motor vehicles equipped with a stop-and-start system in which, whenever the stop-and-start strategy is implemented causing turning-off of the engine, the cooling circuit ceases to perform its function of cooling of the passenger compartment.

To overcome said drawback, it has been proposed to adopt, instead of an evaporator of a conventional type, a special evaporator including a portion that is not designed for generation of cold air to be used immediately, but rather for accumulation of cold, for subsequent yielding of the cold accumulated at the moment in which the engine of the motor vehicle is turned off. Said solution basically entails an increase in the thermal inertia of the evaporator such as to slow down heating thereof whenever the cooling circuit ceases to function. However, said solution slows down the initial step of cooling of the passenger compartment of the motor vehicle when the engine is started after a stop in so far as part of the cold generated by the cooling circuit is not used immediately for cooling the passenger compartment, but is used to cool the part of the evaporator that functions as accumulator.

The object of the present invention is to overcome the drawbacks of the known art by providing an air-conditioning system that will guarantee an efficient cooling of the passenger compartment of the motor vehicle in any condition of operation and in particular also during temporary arrests of the engine, such as for example following upon activation of a stop-and-start device.

A further object of the invention is to achieve the aforesaid target without penalizing the efficiency of cooling in any other condition of operation and in particular at starting of the engine after a prolonged stop of the motor vehicle.

Yet a further object of the invention is to achieve the aforesaid target with simple and low-cost means.

With a view to achieving the above objects, the subject of the invention is an air-conditioning system having the characteristics that have been referred to at the start of the present description and further **characterized in that**, in the connection between the heating radiator and the circuit of the liquid for cooling the engine, a by-pass valve is provided, which can be activated for excluding the heating radiator from the circuit of the liquid for cooling the engine, and in that control means are provided, configured for activating said by-pass valve and for keeping the aforesaid mixing valve in an intermediate position when heating of the passenger compartment is not required and the cooling circuit is active, so that in said conditions the radiant mass of said heating radiator functions as accumulator of cold, which can be subsequently used for keeping the passenger compartment cooled also during a temporary arrest of the cooling circuit.

In the system according to the invention, when the aforesaid by-pass valve is activated, the radiator for heating air is no longer involved in the circulation of the liquid for cooling the engine and can hence perform the function of accumulator of cold. Said solution hence enables separation of the function of generation of the cold that is to be immediately used for cooling the passenger compartment of the motor vehicle, which is performed by the evaporator of the cooling circuit, from the function of accumulation of cold to be used subsequently, during temporary arrests of the engine, which is performed by the heating radiator. Consequently, in normal conditions of operation, and in particular after starting of the engine subsequent to a prolonged stop of the vehicle, the entire mass of the evaporator can be dedicated to cooling the passenger compartment of the motor vehicle immediately so as to reduce to a minimum the time necessary for bringing the passenger compartment to the preferred temperature. At the same time, during temporary stoppages of the engine caused, for example, by a stop-and-start device, the mass of the heating radiator, previously cooled in the accumulation step, guarantees the flow of cold air to the passenger compartment.

A further subject of the present invention is the method for controlling the air-conditioning system that is implemented by means of the system described above.

Preferably, the aforesaid control means are electronic control means designed to control both activation of the aforesaid by-pass valve and the position of the aforesaid mixing valve, as well as operation of the compressor of the cooling circuit. In said preferred embodiment, the electronic control means are pre-arranged for activating the function of accumulation of cold by the heating radiator also during the steps of deceleration of the vehicle.

Further characteristics and advantages of the invention will emerge from the ensuing description with reference to the annexed drawings, which are provided purely by way of non-limiting example and in which:
- Figure 1 is a scheme of the internal-combustion engine of motor a vehicle and of a radiator for heating the passenger compartment of the motor vehicle connected to the circuit for cooling the engine, implemented with the by-pass valve provided in the system according to the invention;
- Figures 2 and 3 illustrate a scheme of a system for supplying the air to the passenger compartment of the motor vehicle in two different operating conditions, according to the strategy forming the subject of the present invention; and
- Figures 4 and 5 are diagrams illustrating the advantages of the present invention with reference to the efficiency of cooling of the passenger compartment of the motor vehicle also in the steps in which the compressor of the cooling circuit is stopped.

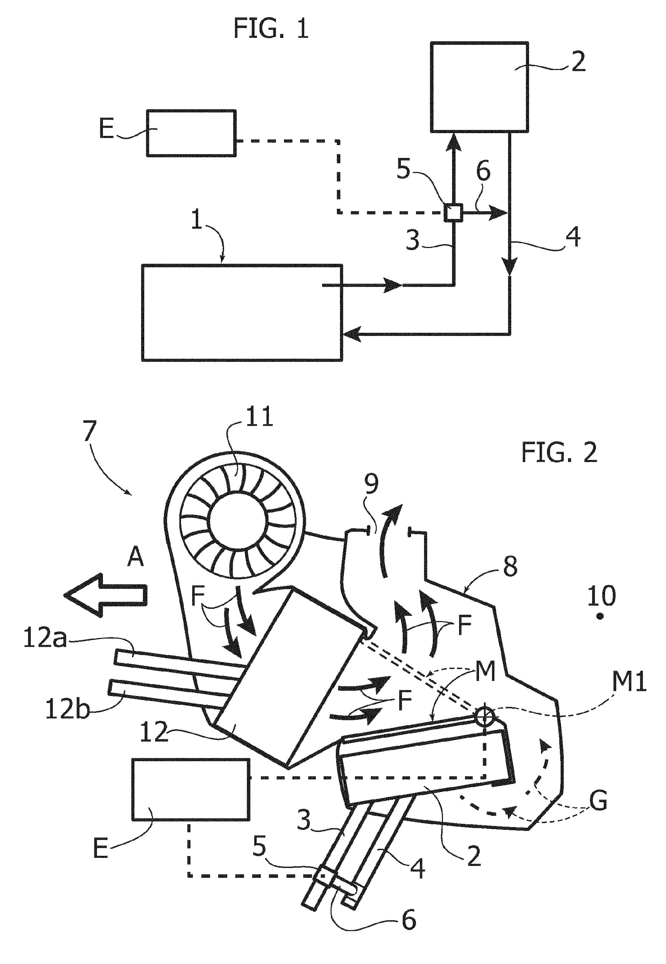

The present invention is applied to a motor vehicle equipped with an internal-combustion engine 1 (illustrated as a whole in Figure 1) and with a radiator 2 for heating the passenger compartment of the motor vehicle connected to the circuit for cooling the engine 1. In particular, with reference to Figure 1, the radiator 2 receives hot liquid leaving the circuit for cooling the engine 1 via a first connection duct 3. The hot liquid traverses the radiator 2, according to the conventional technique, yielding heat to the radiant mass of the radiator 2 and then returns into the circuit for cooling the engine 1 via a duct 4.

For the purposes of the present invention, the conventional arrangement described above is implemented by introducing into the inlet duct 3 of the radiator 2 a by-pass valve 5, of any known type, preferably controlled electronically by a control unit E. When the by-pass valve 5 is inactive, it does not prevent arrival of hot liquid coming from the engine 1, through the duct 3, up to the radiator 2. When the by-pass valve 5 is activated, it causes the hot liquid coming from the engine to flow in a by-pass duct 6 converging in the return duct 4 so that the radiator 2 is not traversed by the circulation of the liquid for cooling the engine.

Figure 2 shows in cross section, in a vertical plane parallel to the longitudinal direction of the motor vehicle, an example of embodiment of an assembly 7 for supplying conditioned air to the passenger compartment of a motor vehicle. The assembly 7 has a structure 8, with an outlet 9 for the flow of conditioned air, on which the dashboard of the motor vehicle (not illustrated) rests. According to the conventional technique, the dashboard is provided with one or more mouths for outflow of the air both adjacent to the windscreen of the motor vehicle and in the front part of the dashboard, as well in the proximity of the floor panel of the motor vehicle, for directing conditioned air within the passenger compartment 10 (in Figure 2 the direction of advance of the motor vehicle is indicated by the arrow A).

According to a technique in itself known, the assembly 7 includes a fan 11 for supplying a flow of air F to the passenger compartment 10 of the motor vehicle, through the mouths in the dashboard. Set along the path of the flow F is an evaporator 12 forming part of the cooling circuit with which the motor vehicle is equipped, with an inlet duct 12a and an outlet duct 12b for the fluid of the cooling circuit.

Also set downstream of the evaporator 12, along the path of the flow of air F, is the radiator 2 for heating the passenger compartment, with the outlet ducts 3, 4.

Once again according to a technique in itself known, set between the evaporator 12 and the heating radiator 2 is a mixing valve M, which in the example illustrated is constituted by a flap mounted oscillating about an axis M1 and mobile (preferably by means of an electric engine controlled by the electronic control unit E) between a first operating position (illustrated in Figure 2), in which the entire flow of air leaving the evaporator 12 is conveyed directly to the outlet 9 and into the passenger compartment 10 of the motor vehicle, without being made to pass through the radiator 2, and an opposite operating position (illustrated with a dashed line in Figure 2), in which the entire flow of air leaving the evaporator 12 is conveyed through the heating radiator 2 before being sent to the passenger compartment 10 (as indicated by the arrows G).

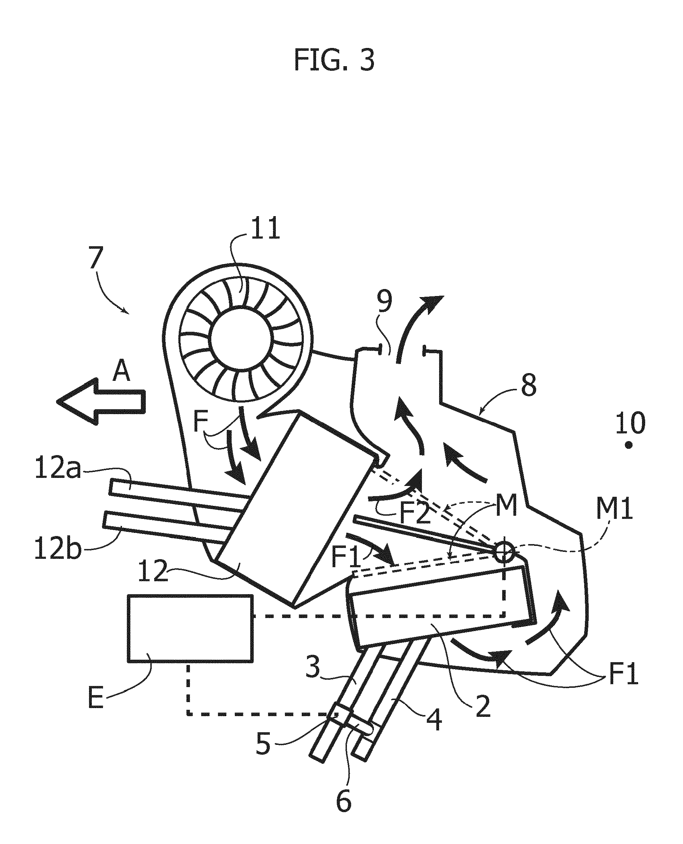

As may be seen in Figure 3, the mixing flap M can be set in an intermediate position, in which the flow of air leaving the evaporator 12 splits into two flows: a first flow F1 traverses the radiator 2 and then reaches the outlet 9, whilst a second flow F2 is sent directly to the outlet 9 and to the passenger compartment 10 without passing through the heating radiator 2.

As has already been discussed above, conventional systems in which the compressor of the cooling circuit is driven by the internal-combustion engine of the motor vehicle present the drawback of an interruption of cooling of the passenger compartment during a temporary arrest of the engine due, for example, to activation of a device of the stop-and-start type. In order to overcome said drawback, according to the present invention there is envisaged, as already mentioned, the use of the aforesaid by-pass valve 5, which enables exclusion of the heating radiator 2 from the circulation of the liquid for cooling the engine, and the control means of the by-pass valve 5 and of the mixing valve M are configured (in the case illustrated herein by means of software programming of the electronic control unit E) so that in a condition of operation in which the passenger compartment of the motor vehicle does not have to be heated and the cooling circuit is active, the valve 5 is activated for excluding the radiator 2 from the circulation of the cooling liquid, and the mixing valve M is set in an intermediate position like the one illustrated in Figure 3 so as to cause in any case a part of the flow of air leaving the evaporator 12 to pass through the radiator 2. In said conditions, part of the flow of cold air is conveyed directly to the passenger compartment of the motor vehicle and is then immediately used for cooling the passenger compartment, but another part of the flow of cold air leaving the evaporator is made to pass through the radiator 2, the radiant mass of which functions as accumulator of cold.

In this way, if the operation of the cooling circuit is subsequently interrupted temporarily (for example, in so far as the engine of the motor vehicle stops following upon implementation of a strategy of the stop-and-start type) a flow of cold air continues to be supplied to the passenger compartment 10 owing to the fact that it traverses the radiator 2, which in this step yields the cold previously accumulated. Preferably, in said step of exploitation of the cold accumulated by the radiator 2, the mixing valve M is brought into the position represented by a dashed line in Figure 2, where the entire flow of air is forced to pass through the radiator 2.

As may be seen, the system according to the invention envisages that the radiator for heating the passenger compartment 10 can be used, when said heating is not necessary, as accumulator of cold during the steps in which heating of the passenger compartment is not required and the circuit for cooling the motor vehicle is active in such a way as to be able to exploit the cold accumulated by said radiator in the steps in which cooling of the passenger compartment is desired but the cooling circuit is inactive.

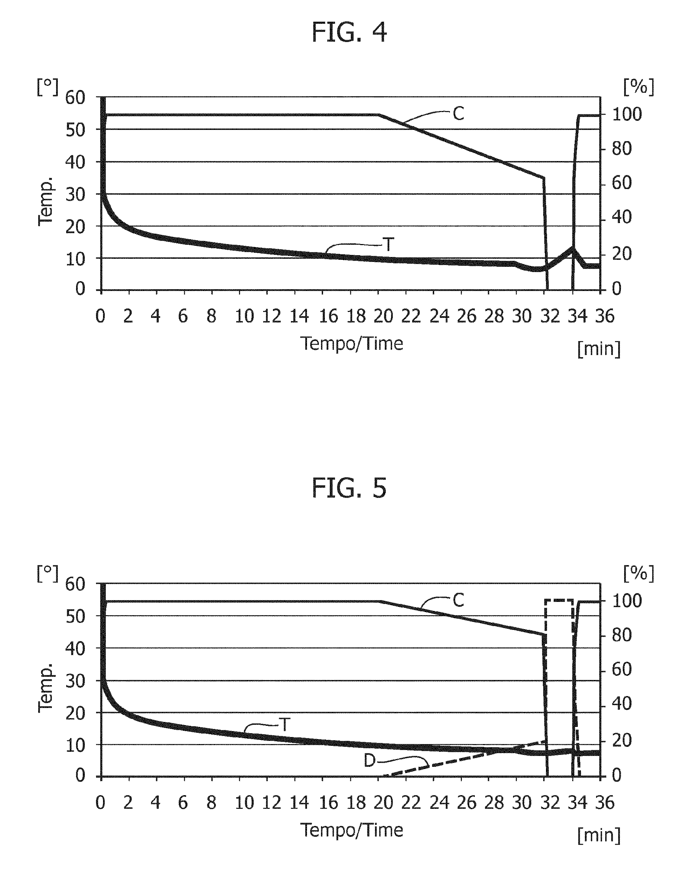

Figures 4 and 5 show the advantages of the invention (Figure 5) as compared to the conventional solution (Figure 4).

In the case of conventional systems, the situation is the one illustrated in Figure 4. In said figure, the line T indicates the variation in time of the temperature of the air entering the passenger compartment of the motor vehicle, starting from an instant zero in which the compressor of the cooling circuit is activated. As may be seen, the temperature, which is initially high, drops progressively following upon cooling of the flow of air through the evaporator 12. In Figure 4, the line C indicates (in percent) the electrical signal for driving the compressor of the cooling circuit. As may be seen, said figure shows an example in which operation of the compressor is temporarily interrupted for two minutes at the instant t = 32 min. Following upon said interruption, the temperature of the air undergoes a sharp rise in the same time interval, and then starts to drop again when the compressor is re-activated.

Figure 5 shows the same diagrams obtained with the present invention. As may be seen, in the step of interruption of operation of the compressor C, the temperature of the air rises only slightly thanks to the fact that, as illustrated, in said step there is in any case exploited the cold accumulated by the radiator 2. In Figure 5, the diagram D indicates the percentage of air that is supplied to the radiator 2 via the mixing valve M. As may be seen, when the compressor is turned off, the valve M is set in the position that feeds the entire flow of air through the radiator 2 in such a way as to exploit fully the cold previously accumulated therein.

In the case of application of the invention to an air-conditioning system provided with electronic control of the compressor, it is possible to optimize the step of accumulation of cold by exploiting the steps of deceleration of the vehicle for increasing the production of cold that is to be accumulated.

The by-pass valve 5 of the radiator 2 can then be used also during the winter season for accelerating the step of heating of the engine after a cold start, momentarily excluding the heating radiator 2 during said step of heating of the engine.

Of course, without prejudice to the principle of the invention, the details of construction and the embodiments may vary widely with respect to what has been described and illustrated herein purely by way of example, without thereby departing from the scope of the present invention.

## Claims

1. An air-conditioning system of a motor vehicle, comprising:
- an evaporator (2) for cooling the air, forming part of a cooling circuit, and interposed in a path of a flow of air (F);
- a radiator (2) for heating the air, connected to the circuit of the liquid for cooling the engine and set in the aforesaid path of the flow of air (F), downstream of the evaporator (12); and
- a mixing valve (M) for directing the flow of air (F) leaving the evaporator (12) all through the heating radiator (2), or else all directly to the passenger compartment (10), without passing through the heating radiator (2), or else part through the cooling radiator (2) and part directly to the passenger compartment (10),
said air-conditioning system being **characterized in that**, in the connection between the heating radiator (2) and the circuit of the liquid for cooling the engine, a by-pass valve (5) is provided that can be activated for excluding the heating radiator (2) from the circuit of the liquid for cooling the engine; and
**in that** control means (E) are provided, configured for activating said by-pass valve (5) and for keeping the aforesaid mixing valve (M) in an intermediate position when heating of the passenger compartment (10) is not required and the cooling circuit is active so that in said conditions the radiant mass of said heating radiator (2) functions as accumulator of cold, which can be subsequently used for keeping the passenger compartment cooled also during a temporary arrest of the cooling circuit.

2. The system according to Claim 1, **characterized in that** said control means are electronic control means (E) programmed for keeping said mixing valve (M) in said intermediate position when heating of the passenger compartment (10) is not required and the cooling circuit is active so as to exploit the radiant mass of the heating radiator (2) as accumulator of cold, said electronic control means (E) being instead programmed for displacing the mixing valve (M) into a position in which the entire flow leaving the evaporator (12) is forced to pass through the heating radiator (2) in the conditions in which cooling of the passenger compartment (10) is desired and the cooling circuit is temporarily inactive so as to exploit to the maximum the cold accumulated in the radiator (2) for keeping the passenger compartment (10) cooled.

3. The system according to Claim 1 or Claim 2, **characterized in that** said control means are electronic control means programmed for activating the step of accumulation of cold in the radiator (2) also in the steps of deceleration of the vehicle.

4. A method for controlling an air-conditioning system of a motor vehicle, wherein said system comprises:
- an evaporator (12) for cooling the air, forming part of a cooling circuit, and interposed in a path of a flow of air (F);
- a radiator (2) for heating the air, connected to the circuit of the liquid for cooling the engine and set in the aforesaid path of the flow of air (F), downstream of the evaporator (12); and
- a mixing valve (M) for directing the flow of air (F) leaving the evaporator all through the heating radiator (2), or else all directly to the passenger compartment (10), without passing through the heating radiator (2), or else part through the heating radiator (2) and part directly to the passenger compartment (10),
said method being **characterized in that** provided in the connection between the heating radiator (2) and the circuit of the liquid for cooling the engine is a by-pass valve (5) that can be activated for excluding the heating radiator (2) from the circuit of the liquid for cooling the engine, and
**in that**, when heating of the passenger compartment (10) is not required and the cooling circuit is active, the aforesaid by-pass valve (5) is activated and the aforesaid mixing valve (M) is set in an intermediate position so that in said condition the radiant mass of said heating radiator (2) functions as accumulator of cold, which can subsequently be used for keeping the passenger compartment (10) cooled also during a temporary deactivation of the cooling circuit.

5. The method according to Claim 4, **characterized in that** said mixing valve (M) is kept in the aforesaid intermediate position when heating of the passenger compartment (10) is not required and the cooling circuit is active, whilst said mixing valve (M) is set in a position where the entire flow leaving the evaporator (12) is forced to pass through said heating radiator (2) to exploit the cold accumulated therein when cooling of the passenger compartment (10) is required and the cooling circuit is temporarily deactivated.

6. The method according to Claim 4 or Claim 5, **characterized in that** the step of accumulation of cold in the heating radiator (2) is activated also during the steps of deceleration of the vehicle.

## Amended claims

### Amended claims in accordance with Rule 137(2) EPC.

**1.** An air-conditioning system of a motor vehicle, comprising:
- an evaporator (2) for cooling the air, forming part of a cooling circuit, and interposed in a path of a flow of air (F);
- a radiator (2) for heating the air, connected to the circuit of the liquid for cooling the engine and set in the aforesaid path of the flow of air (F), downstream of the evaporator (12); and
- a mixing valve (M) for directing the flow of air (F) leaving the evaporator (12) all through the heating radiator (2), or else all directly to the passenger compartment (10), without passing through the heating radiator (2), or else part through the cooling radiator (2) and part directly to the passenger compartment (10),
**wherein** in the connection between the heating radiator (2) and the circuit of the liquid for cooling the engine a valve (5) is provided that can be activated for excluding the heating radiator (2) from the circuit of the liquid for cooling the engine; and
**wherein** control means (E) are provided configured
for keeping the aforesaid mixing valve (M) in an intermediate position when heating of the passenger compartment (10) is not required and the cooling circuit is active so that in said conditions the radiant mass of said heating radiator (2) functions as accumulator of cold, which can be subsequently used for keeping the passenger compartment cooled also during a temporary arrest of the cooling circuit,
said air-conditioning system being **characterized in that** said valve is a by-pass valve (5) interposed in an inlet duct (3) of the heating radiator (2), said valve (5) having an active condition in which it causes hot liquid coming from the engine to flow in a by-pass duct (6) converging in a return duct (4), so that the radiator (2) is not traversed by the circulation of the engine cooling liquid.

**2.** The system according to Claim 1, **characterized in that** said control means are electronic control means (E) programmed for keeping said mixing valve (M) in said intermediate position when heating of the passenger compartment (10) is not required and the cooling circuit is active so as to exploit the radiant mass of the heating radiator (2) as accumulator of cold, said electronic control means (E) being instead programmed for displacing the mixing valve (M) into a position in which the entire flow leaving the evaporator (12) is forced to pass through the heating radiator (2) in the conditions in which cooling of the passenger compartment (10) is desired and the cooling circuit is temporarily inactive so as to exploit to the maximum the cold accumulated in the radiator (2) for keeping the passenger compartment (10) cooled.

**3.** The system according to Claim 1 or Claim 2, **characterized in that** said control means are electronic control means programmed for activating the step of accumulation of cold in the radiator (2) also in the steps of deceleration of the vehicle.

**4.** A method for controlling an air-conditioning system of a motor vehicle, wherein said system comprises:
- an evaporator (12) for cooling the air, forming part of a cooling circuit, and interposed in a path of a flow of air (F);
- a radiator (2) for heating the air, connected to the circuit of the liquid for cooling the engine and set in the aforesaid path of the flow of air (F), downstream of the evaporator (12); and
- a mixing valve (M) for directing the flow of air (F) leaving the evaporator all through the heating radiator (2), or else all directly to the passenger compartment (10), without passing through the heating radiator (2), or else part through the heating radiator (2) and part directly to the passenger compartment (10),
wherein provided in the connection between the heating radiator (2) and the circuit of the liquid for cooling the engine is a valve (5) that can be activated for excluding the heating radiator (2) from the circuit of the liquid for cooling the engine, and
wherein when heating of the passenger compartment (10) is not required and the cooling circuit is active, the aforesaid by-pass valve (5) is activated and the aforesaid mixing valve (M) is set in an intermediate position so that in said condition the radiant mass of said heating radiator (2) functions as accumulator of cold, which can subsequently be used for keeping the passenger compartment (10) cooled also during a temporary deactivation of the cooling circuit,
said air-conditioning system being **characterized in that** said valve is a by-pass valve (5) interposed in an inlet duct (3) of the heating radiator (2), said valve (5) having an active condition in which it causes hot liquid coming from the engine to flow in a by-pass duct (6) converging in a return duct (4), so that the radiator (2) is not traversed by the circulation of the engine cooling liquid.

**5.** The method according to Claim 4, **characterized in that** said mixing valve (M) is kept in the aforesaid intermediate position when heating of the passenger compartment (10) is not required and the cooling circuit is active, whilst said mixing valve (M) is set in a position where the entire flow leaving the evaporator (12) is forced to pass through said heating radiator (2) to exploit the cold accumulated therein when cooling of the passenger compartment (10) is required and the cooling circuit is temporarily deactivated.

**6.** The method according to Claim 4 or Claim 5, **characterized in that** the step of accumulation of cold in the heating radiator (2) is activated also during the steps of deceleration of the vehicle.
